(19) Europäisches Patentamt
European Patent Office
Office européen des brevets

(11) **EP 3 792 862 A1**

(12) **EUROPEAN PATENT APPLICATION**

(43) Date of publication:
**17.03.2021 Bulletin 2021/11**

(51) Int Cl.:
***G06Q 40/06*** *(2012.01)*

(21) Application number: **20196345.1**

(22) Date of filing: **16.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.09.2019 US 201962900961 P**
**16.01.2020 US 202016744514**

(71) Applicant: **JPMorgan Chase Bank, N.A.**
**New York, NY 10179 (US)**

(72) Inventors:
• **Buehler, Hans**
**New York, NY New York 10179 (US)**
• **Moussu, Louis-Andre**
**New York, NY New York 10179 (US)**
• **Wood, Ben**
**New York, NY New York 10179 (US)**

(74) Representative: **Patentanwälte Olbricht Buchhold Keulertz**
**Partnerschaft mbB**
**Bettinastraße 53-55**
**60325 Frankfurt am Main (DE)**

(54) **METHOD FOR OPTIMIZING A HEDGING STRATEGY FOR PORTFOLIO MANAGEMENT**

(57)    A method and a computing apparatus for managing a portfolio of securities and derivatives are provided. The method includes: identifying a plurality of available hedging instruments based on the portfolio of securities and derivatives; obtaining historical market data that relates to the identified plurality of hedging instruments; assessing an optimized value of the portfolio of securities and derivatives based on the obtained historical market data; and determining at least one potential action to be executed with respect to the plurality of available hedging instruments based on the assessed optimized value. The assessment of the optimized value of the securities portfolio may effected by generating a market model simulation function, such as a finite dimensional Linear Markov Representation (LMR), based on the portfolio and maximizing a value of the generated market model simulation function.

**FIG. 1**

EP 3 792 862 A1

**Description**

CROSS-REFERENCE TO RELATED APPLICATION

This application claims the benefit of U.S. Provisional Patent Application Serial No. 62/900,961, filed September 16, 2019, which is hereby incorporated by reference in its entirety.

BACKGROUND

1. Field of the Disclosure

This technology generally relates to methods and systems for managing a portfolio of securities and derivatives, and more particularly, to methods and systems for using a data-driven approach to optimize a hedging strategy in connection with managing a portfolio of securities and derivatives.

2. Background Information

Conventional financial inventory management of securities and derivatives typically relies on classic complete market models of quantitative finance. In this type of model, it is assumed that all risks can be eliminated by cost-free continuous-time trading in markets with infinite depth, whose price processes evolve undisturbed by trading activity. A main characteristic of this approach is that sensitivities of the complete-market value of a particular inventor with respect to changes in market parameters (also referred to herein as "the greeks") are used as risk management signals.
Because the idealized assumptions of a complete market do not apply in real markets, complete market models require continual manual adjustments and oversight. Further, decision-making in the financial inventory management area has typically been heavily dependent upon human decision making or heuristic "if-then-else" automation.
In an environment in which data availability and computation power is scarce, such an approach may be understandable. However, in the current environment, in which data availability and computation power are more plentiful, there is a need for a data-driven framework for scalable decision making in financial inventory management.

SUMMARY

The present disclosure, through one or more of its various aspects, embodiments, and/or specific features or sub-components, provides, inter alia, various systems, servers, devices, methods, media, programs, and platforms for using a data-driven approach to optimize a hedging strategy in connection with managing a portfolio of securities and derivatives.
According to an aspect of the present disclosure, a method carried out by a computer for managing a portfolio of securities and derivatives is provided. The method is implemented by at least one processor. The method includes: identifying, by the at least one processor, a plurality of available hedging instruments based on the portfolio of securities and derivatives, each of the available hedging instruments relating to at least one security included in the portfolio of securities and derivatives; obtaining, by the at least one processor, historical market data that relates to the identified plurality of hedging instruments; assessing, by the at least one processor, an optimized value of the portfolio of securities and derivatives based on the obtained historical market data; and determining, by the at least one processor, at least one potential action to be executed with respect to the plurality of available hedging instruments based on the assessed optimized value.
The assessing the optimized value of the portfolio of securities and derivatives may include generating a market model simulation function based on the portfolio of securities and derivatives and maximizing a value of the generated market model simulation function.
The market model simulation function may be based on a finite dimensional Linear Markov Representation (LMR) of the portfolio of securities and derivatives. Examples of LMRs include Greek based representations, Signatures, or an interpolated set of standardized instruments such as vanilla options.
The generating the market model simulation function may include training the market model simulation function based on the obtained historical market data.
The assessing the optimized value of the portfolio of securities and derivatives may include evaluating an appropriate performance measure such as the entropy of a future cash flow as a function of a risk aversion parameter and maximizing the value of the generated market model simulation function based at least in part on the evaluated performance measure. Performance measures are preferably convex and monotone.
The method may further include obtaining, by the at least one processor, additional information that relates to a first security included in the portfolio of securities and derivatives. The assessing the optimized risk-adjusted value of the portfolio of securities and derivatives may be based on the obtained historical market data and the obtained additional information.

The determining the at least one potential action to be executed may be based at least in part on at least one trading restriction.

The at least one trading restriction may include at least one of a risk limit based on a current portfolio exposure, a liquidity restriction, and a regulatory constraint.

The determining the at least one potential action to be executed may be based at least in part on a transaction cost.

The plurality of hedging instruments may include at least one hedging instrument that relates to a derivative for which no market price is publicly available.

According to another aspect of the present disclosure, a computing apparatus for managing a portfolio of securities and derivatives is provided. The computing apparatus includes a processor, a memory, and a communication interface coupled to each of the processor and the memory. The processor is configured to perform at least the following steps: identify a plurality of available hedging instruments based on the portfolio of securities and derivatives, each of the available hedging instruments relating to at least one security included in the portfolio of securities and derivatives; obtain historical market data that relates to the identified plurality of hedging instruments; assess an optimized value of the portfolio of securities and derivatives based on the obtained historical market data; and determine at least one potential action to be executed with respect to the plurality of available hedging instruments based on the assessed optimized value.

The processor may be further configured to assess the optimized value of the portfolio of securities and derivatives by generating a market model simulation function based on the securities portfolio and maximizing a value of the generated market model simulation function.

The market model simulation function may be based on a finite dimensional Linear Markov Representation (LMR) of the portfolio of securities and derivatives.

The processor may be further configured to train the market model simulation function based on the obtained historical market data.

The processor may be further configured to assess the optimized value of the portfolio of securities and derivatives by evaluating a performance measure of a future cash flow as a function of a risk aversion parameter and maximizing the value of the generated market model simulation function based at least in part on the evaluated performance measure.

The processor may be further configured to obtain additional information that relates to a first security included in the portfolio of securities and derivatives, and to assess the optimized risk-adjusted value of the portfolio of securities and derivatives based on the obtained historical market data and the obtained additional information.

The processor may be further configured to determine the at least one potential action to be executed based at least in part on at least one trading restriction.

The at least one trading restriction may include at least one of a risk limit based on a current portfolio exposure, a liquidity restriction, and a regulatory constraint.

The processor may be further configured to determine the at least one potential action to be executed based at least in part on a transaction cost.

The plurality of hedging instruments may include at least one hedging instrument that relates to a derivative for which no market price is publicly available.

BRIEF DESCRIPTION OF THE DRAWINGS

The present disclosure is further described in the detailed description which follows, in reference to the noted plurality of drawings, by way of non-limiting examples of preferred embodiments of the present disclosure, in which like characters represent like elements throughout the several views of the drawings.

FIG. 1 illustrates an exemplary computer system.
FIG. 2 illustrates an exemplary diagram of a network environment.
FIG. 3 shows an exemplary system for implementing a method for using a data-driven approach to optimize a hedging strategy in connection with managing a portfolio of securities and derivatives.
FIG. 4 is a flowchart of an exemplary process for implementing a method for using a data-driven approach to optimize a hedging strategy in connection with managing a portfolio of securities and derivatives.

DETAILED DESCRIPTION

Through one or more of its various aspects, embodiments and/or specific features or sub-components of the present disclosure, are intended to bring out one or more of the advantages as specifically described above and noted below.

The examples may also be embodied as one or more non-transitory computer readable media having instructions stored thereon for one or more aspects of the present technology as described and illustrated by way of the examples herein. The instructions in some examples include executable code that, when executed by one or more processors, cause the processors to carry out steps necessary to implement the methods of the examples of this technology that are described and illustrated herein.

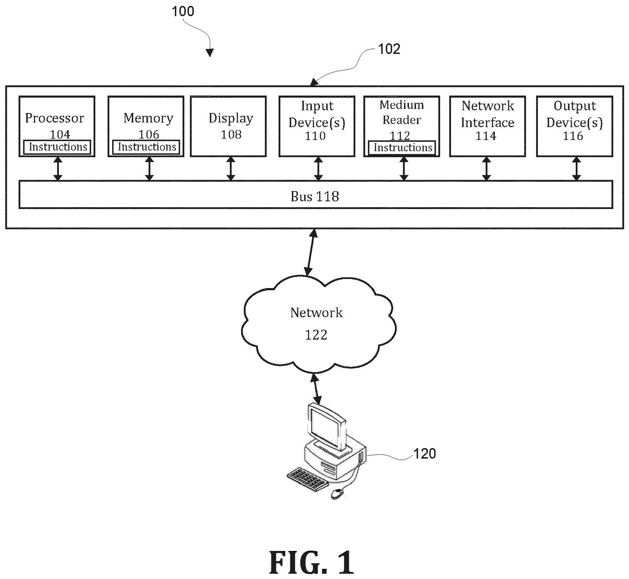

FIG. 1 is an exemplary system for use in accordance with the embodiments described herein. The system 100 is generally shown and may include a computer system 102, which is generally indicated.

The computer system 102 may include a set of instructions that can be executed to cause the computer system 102 to perform any one or more of the methods or computer based functions disclosed herein, either alone or in combination with the other described devices. The computer system 102 may operate as a standalone device or may be connected to other systems or peripheral devices. For example, the computer system 102 may include, or be included within, any one or more computers, servers, systems, communication networks or cloud environment. Even further, the instructions may be operative in such cloud-based computing environment.

In a networked deployment, the computer system 102 may operate in the capacity of a server or as a client user computer in a server-client user network environment, a client user computer in a cloud computing environment, or as a peer computer system in a peer-to-peer (or distributed) network environment. The computer system 102, or portions thereof, may be implemented as, or incorporated into, various devices, such as a personal computer, a tablet computer, a set-top box, a personal digital assistant, a mobile device, a palmtop computer, a laptop computer, a desktop computer, a communications device, a wireless smart phone, a personal trusted device, a wearable device, a global positioning satellite (GPS) device, a web appliance, or any other machine capable of executing a set of instructions (sequential or otherwise) that specify actions to be taken by that machine. Further, while a single computer system 102 is illustrated, additional embodiments may include any collection of systems or sub-systems that individually or jointly execute instructions or perform functions. The term "system" shall be taken throughout the present disclosure to include any collection of systems or sub-systems that individually or jointly execute a set, or multiple sets, of instructions to perform one or more computer functions.

As illustrated in FIG. 1, the computer system 102 may include at least one processor 104. The processor 104 is tangible and non-transitory. As used herein, the term "non-transitory" is to be interpreted not as an eternal characteristic of a state, but as a characteristic of a state that will last for a period of time. The term "non-transitory" specifically disavows fleeting characteristics such as characteristics of a particular carrier wave or signal or other forms that exist only transitorily in any place at any time. The processor 104 is an article of manufacture and/or a machine component. The processor 104 is configured to execute software instructions in order to perform functions as described in the various embodiments herein. The processor 104 may be a general purpose processor or may be part of an application specific integrated circuit (ASIC). The processor 104 may also be a microprocessor, a microcomputer, a processor chip, a controller, a microcontroller, a digital signal processor (DSP), a state machine, or a programmable logic device. The processor 104 may also be a logical circuit, including a programmable gate array (PGA) such as a field programmable gate array (FPGA), or another type of circuit that includes discrete gate and/or transistor logic. The processor 104 may be a central processing unit (CPU), a graphics processing unit (GPU), or both. Additionally, any processor described herein may include multiple processors, parallel processors, or both. Multiple processors may be included in, or coupled to, a single device or multiple devices.

The computer system 102 may also include a computer memory 106. The computer memory 106 may include a static memory, a dynamic memory, or both in communication. Memories described herein are tangible storage mediums that can store data and executable instructions, and are non-transitory during the time instructions are stored therein. Again, as used herein, the term "non-transitory" is to be interpreted not as an eternal characteristic of a state, but as a characteristic of a state that will last for a period of time. The term "non-transitory" specifically disavows fleeting characteristics such as characteristics of a particular carrier wave or signal or other forms that exist only transitorily in any place at any time. The memories are an article of manufacture and/or machine component. Memories described herein are computer-readable mediums from which data and executable instructions can be read by a computer. Memories as described herein may be random access memory (RAM), read only memory (ROM), flash memory, electrically programmable read only memory (EPROM), electrically erasable programmable read-only memory (EEPROM), registers, a hard disk, a cache, a removable disk, tape, compact disk read only memory (CD-ROM), digital versatile disk (DVD), floppy disk, blu-ray disk, or any other form of storage medium known in the art. Memories may be volatile or non-volatile, secure and/or encrypted, unsecure and/or unencrypted. Of course, the computer memory 106 may comprise any combination of memories or a single storage.

The computer system 102 may further include a display 108, such as a liquid crystal display (LCD), an organic light emitting diode (OLED), a flat panel display, a solid state display, a cathode ray tube (CRT), a plasma display, or any other type of display, examples of which are well known to skilled persons.

The computer system 102 may also include at least one input device 110, such as a keyboard, a touch-sensitive input screen or pad, a speech input, a mouse, a remote control device having a wireless keypad, a microphone coupled to a speech recognition engine, a camera such as a video camera or still camera, a cursor control device, a global positioning system (GPS) device, an altimeter, a gyroscope, an accelerometer, a proximity sensor, or any combination thereof. Those skilled in the art appreciate that various embodiments of the computer system 102 may include multiple input devices 110. Moreover, those skilled in the art further appreciate that the above-listed, exemplary input devices 110 are not meant to be exhaustive and that the computer system 102 may include any additional, or alternative, input devices 110.

The computer system 102 may also include a medium reader 112 which is configured to read any one or more sets of instructions, e.g. software, from any of the memories described herein. The instructions, when executed by a processor, can be used to perform one or more of the methods and processes as described herein. In a particular embodiment, the instructions may reside completely, or at least partially, within the memory 106, the medium reader 112, and/or the processor 110 during execution by the computer system 102.

Furthermore, the computer system 102 may include any additional devices, components, parts, peripherals, hardware, software or any combination thereof which are commonly known and understood as being included with or within a computer system, such as, but not limited to, a network interface 114 and an output device 116. The output device 116 may be, but is not limited to, a speaker, an audio out, a video out, a remote control output, a printer, or any combination thereof.

Each of the components of the computer system 102 may be interconnected and communicate via a bus 118 or other communication link. As shown in FIG. 1, the components may each be interconnected and communicate via an internal bus. However, those skilled in the art appreciate that any of the components may also be connected via an expansion bus. Moreover, the bus 118 may enable communication via any standard or other specification commonly known and understood such as, but not limited to, peripheral component interconnect, peripheral component interconnect express, parallel advanced technology attachment, serial advanced technology attachment, etc.

The computer system 102 may be in communication with one or more additional computer devices 120 via a network 122. The network 122 may be, but is not limited to, a local area network, a wide area network, the Internet, a telephony network, a short-range network, or any other network commonly known and understood in the art. The short-range network may include, for example, Bluetooth, Zigbee, infrared, near field communication, ultraband, or any combination thereof. Those skilled in the art appreciate that additional networks 122 which are known and understood may additionally or alternatively be used and that the exemplary networks 122 are not limiting or exhaustive. Also, while the network 122 is shown in FIG. 1 as a wireless network, those skilled in the art appreciate that the network 122 may also be a wired network.

The additional computer device 120 is shown in FIG. 1 as a personal computer. However, those skilled in the art appreciate that, in alternative embodiments of the present application, the computer device 120 may be a laptop computer, a tablet PC, a personal digital assistant, a mobile device, a palmtop computer, a desktop computer, a communications device, a wireless telephone, a personal trusted device, a web appliance, a server, or any other device that is capable of executing a set of instructions, sequential or otherwise, that specify actions to be taken by that device. Of course, those skilled in the art appreciate that the above-listed devices are merely exemplary devices and that the device 120 may be any additional device or apparatus commonly known and understood in the art without departing from the scope of the present application. For example, the computer device 120 may be the same or similar to the computer system 102. Furthermore, those skilled in the art similarly understand that the device may be any combination of devices and apparatuses.

Of course, those skilled in the art appreciate that the above-listed components of the computer system 102 are merely meant to be exemplary and are not intended to be exhaustive and/or inclusive. Furthermore, the examples of the components listed above are also meant to be exemplary and similarly are not meant to be exhaustive and/or inclusive.

In accordance with various embodiments of the present disclosure, the methods described herein may be implemented using a hardware computer system that executes software programs. Further, in an exemplary, non-limited embodiment, implementations can include distributed processing, component/object distributed processing, and parallel processing. Virtual computer system processing can be constructed to implement one or more of the methods or functionality as described herein, and a processor described herein may be used to support a virtual processing environment.

As described herein, various embodiments provide optimized methods and systems for using a data-driven approach to optimize a hedging strategy in connection with managing a portfolio of securities and derivatives.

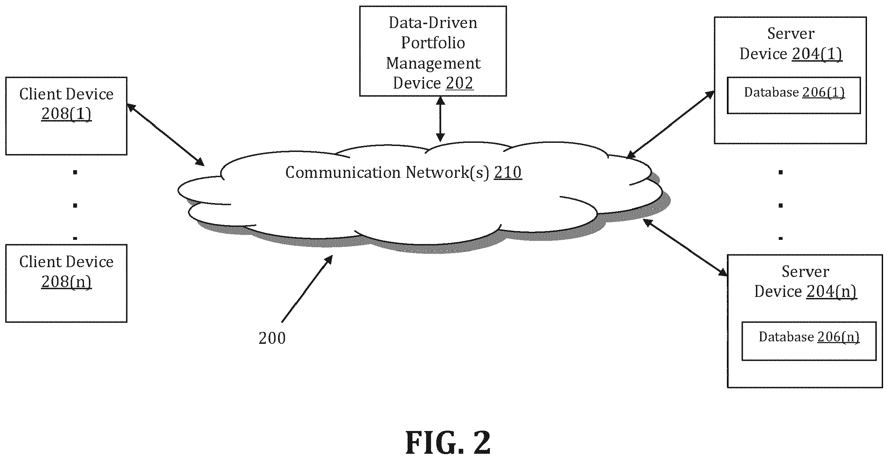

Referring to FIG. 2, a schematic of an exemplary network environment 200 for implementing a method for using a data-driven approach to optimize a hedging strategy in connection with managing a portfolio of securities and derivatives is illustrated. In an exemplary embodiment, the method is executable on any networked computer platform, such as, for example, a personal computer (PC).

The method for using a data-driven approach to optimize a hedging strategy in connection with managing a portfolio of securities and derivatives may be implemented by a Data-Driven Portfolio Management (DDPM) device 202.

The DDPM device 202 may be the same or similar to the computer system 102 as described with respect to FIG. 1. The DDPM device 202 may store one or more applications that can include executable instructions that, when executed by the DDPM device 202, cause the DDPM device 202 to perform actions, such as to transmit, receive, or otherwise process network messages, for example, and to perform other actions described and illustrated below with reference to the figures. The application(s) may be implemented as modules or components of other applications. Further, the application(s) can be implemented as operating system extensions, modules, plugins, or the like.

Even further, the application(s) may be operative in a cloud-based computing environment. The application(s) may be executed within or as virtual machine(s) or virtual server(s) that may be managed in a cloud-based computing environment. Also, the application(s), and even the DDPM device 202 itself, may be located in virtual server(s) running in a cloud-based computing environment rather than being tied to one or more specific physical network computing devices. Also, the application(s) may be running in one or more virtual machines (VMs) executing on the DDPM device 202. Additionally, in one or more embodiments of this technology, virtual machine(s) running on the DDPM device 202 may be managed or supervised by a hypervisor.

In the network environment 200 of FIG. 2, the DDPM device 202 is coupled to a plurality of server devices 204(1)-204(n) that hosts a plurality of databases 206(1)-206(n), and also to a plurality of client devices 208(1)-208(n) via communication network(s) 210. A communication interface of the DDPM device 202, such as the network interface 114 of the computer system 102 of FIG. 1, operatively couples and communicates between the DDPM device 202, the server devices 204(1)-204(n), and/or the client devices 208(1)-208(n), which are all coupled together by the communication network(s) 210, although other types and/or numbers of communication networks or systems with other types and/or numbers of connections and/or configurations to other devices and/or elements may also be used.

The communication network(s) 210 may be the same or similar to the network 122 as described with respect to FIG. 1, although the DDPM device 202, the server devices 204(1)-204(n), and/or the client devices 208(1)-208(n) may be coupled together via other topologies. Additionally, the network environment 200 may include other network devices such as one or more routers and/or switches, for example, which are well known in the art and thus will not be described herein. This technology provides a number of advantages including methods, non-transitory computer readable media, and DDPM devices that efficiently implement a method for using a data-driven approach to optimize a hedging strategy in connection with managing a portfolio of securities and derivatives.

By way of example only, the communication network(s) 210 may include local area network(s) (LAN(s)) or wide area network(s) (WAN(s)), and can use TCP/IP over Ethernet and industry-standard protocols, although other types and/or numbers of protocols and/or communication networks may be used. The communication network(s) 210 in this example may employ any suitable interface mechanisms and network communication technologies including, for example, teletraffic in any suitable form (e.g., voice, modem, and the like), Public Switched Telephone Network (PSTNs), Ethernet-based Packet Data Networks (PDNs), combinations thereof, and the like.

The DDPM device 202 may be a standalone device or integrated with one or more other devices or apparatuses, such as one or more of the server devices 204(1)-204(n), for example. In one particular example, the DDPM device 202 may include or be hosted by one of the server devices 204(1)-204(n), and other arrangements are also possible. Moreover, one or more of the devices of the DDPM device 202 may be in a same or a different communication network including one or more public, private, or cloud networks, for example.

The plurality of server devices 204(1)-204(n) may be the same or similar to the computer system 102 or the computer device 120 as described with respect to FIG. 1, including any features or combination of features described with respect thereto. For example, any of the server devices 204(1)-204(n) may include, among other features, one or more processors, a memory, and a communication interface, which are coupled together by a bus or other communication link, although other numbers and/or types of network devices may be used. The server devices 204(1)-204(n) in this example may process requests received from the DDPM device 202 via the communication network(s) 210 according to the HTTP-based and/or JavaScript Object Notation (JSON) protocol, for example, although other protocols may also be used.

The server devices 204(1)-204(n) may be hardware or software or may represent a system with multiple servers in a pool, which may include internal or external networks. The server devices 204(1)-204(n) hosts the databases 206(1)-206(n) that are configured to store historical market data, such as price data for individual securities and/or market indexes, and portfolio management data, which includes data that relates to securities, bonds, derivatives, and hedging instruments that are included in a portfolio of a particular investor.

Although the server devices 204(1)-204(n) are illustrated as single devices, one or more actions of each of the server devices 204(1)-204(n) may be distributed across one or more distinct network computing devices that together comprise one or more of the server devices 204(1)-204(n). Moreover, the server devices 204(1)-204(n) are not limited to a particular configuration. Thus, the server devices 204(1)-204(n) may contain a plurality of network computing devices that operate using a master/slave approach, whereby one of the network computing devices of the server devices 204(1)-204(n) operates to manage and/or otherwise coordinate operations of the other network computing devices.

The server devices 204(1)-204(n) may operate as a plurality of network computing devices within a cluster architecture, a peer-to peer architecture, virtual machines, or within a cloud architecture, for example. Thus, the technology disclosed herein is not to be construed as being limited to a single environment and other configurations and architectures are also envisaged.

The plurality of client devices 208(1)-208(n) may also be the same or similar to the computer system 102 or the computer device 120 as described with respect to FIG. 1, including any features or combination of features described with respect thereto. For example, the client devices 208(1)-208(n) in this example may include any type of computing device that can interact with the DDPM device 202 via communication network(s) 210. Accordingly, the client devices 208(1)-208(n) may be mobile computing devices, desktop computing devices, laptop computing devices, tablet computing devices, virtual machines (including cloud-based computers), or the like, that host chat, e-mail, or voice-to-text applications, for example. In an exemplary embodiment, at least one client device 208 is a wireless mobile communication device, i.e., a smart phone.

The client devices 208(1)-208(n) may run interface applications, such as standard web browsers or standalone client applications, which may provide an interface to communicate with the DDPM device 202 via the communication network(s) 210 in order to communicate user requests and information. The client devices 208(1)-208(n) may further include, among other features, a display device, such as a display screen or touchscreen, and/or an input device, such as a keyboard, for example.

Although the exemplary network environment 200 with the DDPM device 202, the server devices 204(1)-204(n), the client devices 208(1)-208(n), and the communication network(s) 210 are described and illustrated herein, other types and/or numbers of systems, devices, components, and/or elements in other topologies may be used. It is to be understood that the systems of the examples described herein are for exemplary purposes, as many variations of the specific hardware and software used to implement the examples are possible, as will be appreciated by those skilled in the relevant art(s).

One or more of the devices depicted in the network environment 200, such as the DDPM device 202, the server devices 204(1)-204(n), or the client devices 208(1)-208(n), for example, may be configured to operate as virtual instances on the same physical machine. In other words, one or more of the DDPM device 202, the server devices 204(1)-204(n), or the client devices 208(1)-208(n) may operate on the same physical device rather than as separate devices communicating through communication network(s) 210. Additionally, there may be more or fewer DDPM devices 202, server devices 204(1)-204(n), or client devices 208(1)-208(n) than illustrated in FIG. 2.

In addition, two or more computing systems or devices may be substituted for any one of the systems or devices in any example. Accordingly, principles and advantages of distributed processing, such as redundancy and replication also may be implemented, as desired, to increase the robustness and performance of the devices and systems of the examples. The examples may also be implemented on computer system(s) that extend across any suitable network using any suitable interface mechanisms and traffic technologies, including by way of example only teletraffic in any suitable form (e.g., voice and modem), wireless traffic networks, cellular traffic networks, Packet Data Networks (PDNs), the Internet, intranets, and combinations thereof.

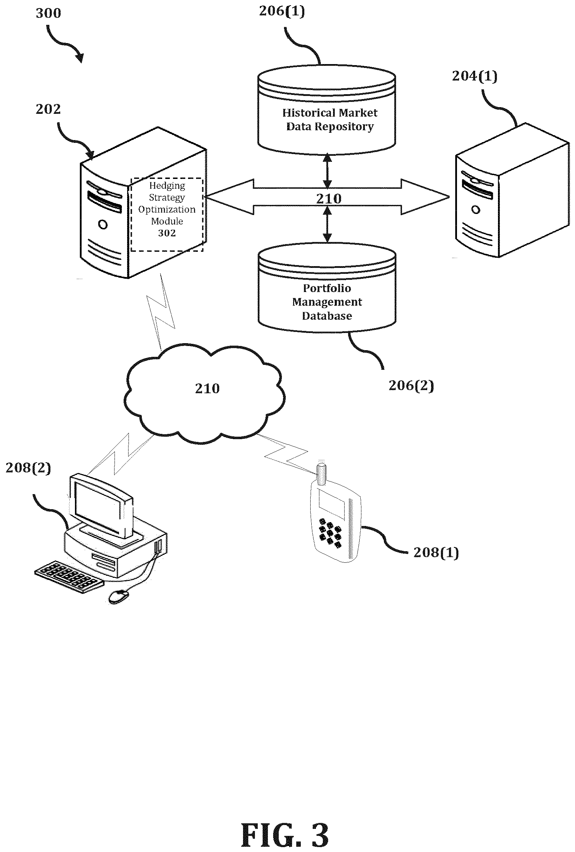

The DDPM device 202 is described and shown in FIG. 3 as including a hedging strategy optimization module 302, although it may include other rules, policies, modules, databases, or applications, for example. As will be described below, the hedging strategy optimization module 302 is configured to implement a method for using a data-driven approach to optimize a hedging strategy in connection with managing a portfolio of securities and derivatives in an automated, efficient, scalable, and reliable manner.

An exemplary process 300 for implementing a method for using a data-driven approach to optimize a hedging strategy in connection with managing a portfolio of securities and derivatives by utilizing the network environment of FIG. 2 is shown as being executed in FIG. 3. Specifically, a first client device 208(1) and a second client device 208(2) are illustrated as being in communication with DDPM device 202. In this regard, the first client device 208(1) and the second client device 208(2) may be "clients" of the DDPM device 202 and are described herein as such. Nevertheless, it is to be known and understood that the first client device 208(1) and/or the second client device 208(2) need not necessarily be "clients" of the DDPM device 202, or any entity described in association therewith herein. Any additional or alternative relationship may exist between either or both of the first client device 208(1) and the second client device 208(2) and the DDPM device 202, or no relationship may exist.

Further, DDPM device 202 is illustrated as being able to access a historical market data repository 206(1) and an individual portfolio management database 206(2). The hedging strategy optimization module 302 may be configured to access these databases for implementing a method for using a data-driven approach to optimize a hedging strategy in connection with managing a portfolio of securities and derivatives.

The first client device 208(1) may be, for example, a smart phone. Of course, the first client device 208(1) may be any additional device described herein. The second client device 208(2) may be, for example, a personal computer (PC). Of course, the second client device 208(2) may also be any additional device described herein.

The process may be executed via the communication network(s) 210, which may comprise plural networks as described above. For example, in an exemplary embodiment, either or both of the first client device 208(1) and the second client device 208(2) may communicate with the DDPM device 202 via broadband or cellular communication. Of course, these embodiments are merely exemplary and are not limiting or exhaustive.

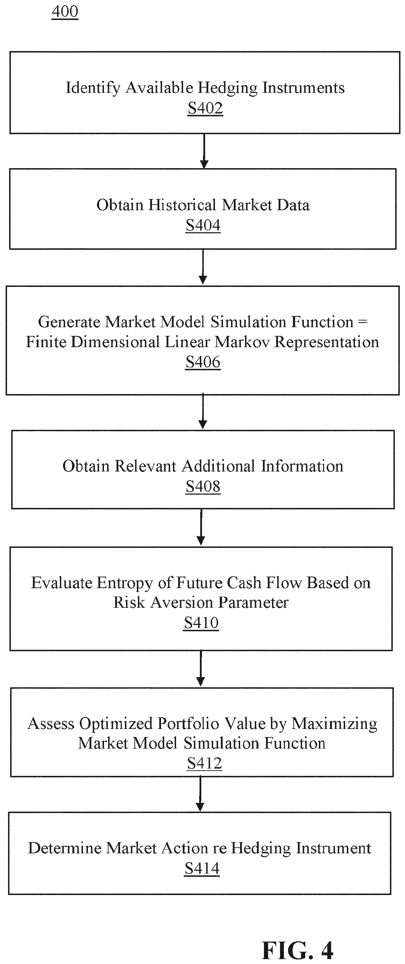

Upon being started, the hedging strategy optimization module 302 executes a process for using a data-driven approach to optimize a hedging strategy in connection with managing a portfolio of securities and derivatives. An exemplary process for using a data-driven approach to optimize a hedging strategy in connection with managing a portfolio of securities and derivatives is generally indicated at flowchart 400 in FIG. 4.

In the process 400 of FIG. 4, at step S402, the hedging strategy optimization module 302 identifies available hedging instruments with a particular portfolio of securities and derivatives. The available hedging instruments may include, for example, any one or more of a share of a stock, a convertible bond, a derivative, a future, an option, and a swap. In an exemplary embodiment, the available hedging instruments may include a derivative for which no market price is publicly available.

At step S404, the hedging strategy optimization module 302 obtains historical market data. In an exemplary embodiment, the historical market data may include pricing data for the list of S&P 500 companies. The list of S&P 500 companies includes common stocks that are issued by large-capitalization companies and are actively traded on American stock exchanges.

At step S406, the hedging strategy optimization module 302 generates a market model simulation function. In an exemplary embodiment, the market model simulation function is based on a finite dimensional Linear Markov Representation (LMR) of the securities portfolio. In an exemplary embodiment, the generation of the market model simulation function may include training the LMR function based on the obtained historical market data.

At step S408, the hedging strategy optimization module 302 obtains additional information that relates to one or more of the hedging instruments that have been identified as being available within the portfolio. In an exemplary embodiment, the additional information may include news information that relates to current events and/or recent activities that relate to a portion of the portfolio.

At step S410, the hedging strategy optimization module 302 evaluates a performance measure of a future cash flow of the portfolio based on at least one risk aversion parameter. Then, at step S412, the hedging strategy optimization module 302 assesses an optimized risk-adjusted value of the portfolio of securities and derivatives by maximizing a value of the LMR function based at least in part on the obtained additional information, the risk aversion parameter(s), and the evaluated performance measure. In an exemplary embodiment, the performance measure may include an entropy of the future cash flow of the portfolio.

At step S414, the hedging strategy optimization module 302 determines a potential market action to be taken based on the assessed optimized risk-adjusted value of the portfolio of securities and derivatives as determined in step S412. In an exemplary embodiment, the determination of the potential market action may be based at least in part on one or more trading restrictions, such as, for example, any one or more of a current portfolio exposure, a liquidity restriction, and/or a regulatory constraint. In another exemplary embodiment, the determination of the potential market action may be based at least in part on a transaction cost.

An unpublished article entitled "Deep Bellman Hedging: Reinforcement Learning for Bellman Hedging of Exotics Under Market Frictions" provides a detailed discussion with respect to an exemplary embodiment of a method for using a data-driven approach to optimize a hedging strategy in connection with managing a portfolio of securities and derivatives. The content of this article is provided below.

In an exemplary embodiment, a method for using a data-driven approach to optimize a hedging strategy in connection with managing a portfolio of securities and derivatives is closer to classic reinforcement learning where fixed samples of historic "experiences" are used to train the model. In particular, those experiences include historic trading positions and market data. Further, the portfolio is included in the market state, which may be understood as a true Bellman representation of the "Deep Hedging" problem.

In an exemplary embodiment, the method is based on an actor-critic framework and a rigorous derivation of a set of optimization targets, which shows how actor and critic can be trained cooperatively in one minimization run per iteration. Since they share very similar computation, this speeds up learning considerably.

In an exemplary embodiment, the following description uses capital (uppercase) letters to refer to random variables, and lowercase letters for instances of those variables. $S_t = (M_t, Z_t)$ is used to refer to state random variables, which is given both by all observed market data $M_t$ and by a current inventory $Z_t$ of securities and over-the-counter derivatives, jointly also called a contingent claim or a portfolio. It is assumed here that $Z_t \in Z \subset R^K$ where Z is a finite dimensional Linear Markov Representation (LMR), of any portfolio of derivatives with the property that for two portfolio representations $Z_t$ and $X_t$ and a real a, the sum $Z_t + aX_t$ is again an LMR. Note that the representation is usually not unique and that two different real portfolios may have the same LMR. It is further assumed that $0 \in R^K$ represents the empty portfolio.

In an exemplary embodiment, it is assumed that each derivative is represented as a vector of greeks under a classic derivative model computed using the market data Mt. The derivative may therefore be identified with its greek exposure. The resulting learned model will not use any greeks directly, but would in this example, rely on the greeks to indicate future hedging requirements based on past experiences.

Any portfolio generates as rewards cashflows $O_t \equiv O(S_t)$, where negative cash flows represent liabilities. The following does not use all information available in the market as explanatory features in below learning methods; instead, there is a focus on a reduced set $F_t \subset S_t$ of possibly engineered features.

In an exemplary embodiment, the exposure arising from this contingent claim may be hedged by trading in a range of liquid hedging instruments **H** with LMR $\mathbf{H}_t$ and market mid-prices $H_t = (H^1,..., H^n)$. Trading in **H** is represented by a stochastic action $A_t \in R^n$ drawn from a trading policy $\pi(S_t)$ such that the results lie within a convex set $A(S_t)$ which represents the prevailing trading restrictions. These are often given as a function of greek exposure, and the setA allows imposing risk limits based on acurrent portfolio exposure; the introduction of liquidity restrictions; andanimplementation of regulatory constraints just at prohibition of naked shorts. The price of executing the action $A_t$ is denoted by $C_t(A_t) \equiv C(A_t, S_t)$ which acts as an additional negative reward which is driven by an action decision. It is assumed that $C_t(\cdot)$ is normalized and convex, noting that the existence of fixed fees implies a non-convex reward structure for some products. A classic example is that of proportional transaction cost

$C_t(A_t) := (A_t + c_t|A_t|) \cdot H_t$ for some $c_t \equiv c_t(S_t) > 0$.

In an exemplary embodiment, the joint rewards received in $S_t$ due to an action At may be expressed as $R_t \equiv R(S_t, A_t) := O(S_t) - C(A_t, S_t)$.

In an exemplary embodiment, it may be assumed that $B_t \equiv B(S_t)$ is a non-defaultable reference bank account which accrues overnight interest and set $\gamma_t \equiv \gamma(S_t) := 1/B(S_t)$. Such an account is called "numeraire" in classic quantitative finance.

In an exemplary embodiment, $Z_t \oplus A_t := Z_t + A_t \mathbf{H}_t$ may be defined as the new portfolio arising from entering into a hedge position. The transition probability from a state $s = (m, z)$ under an action a to a new state $s^l = (m^l, z^l)$ is then given in terms of a transition probability $p(s^l|s, a)$ for the new feature state as $p(s^l|s, a)\pi(a|s)$. In the application below, $z^l := z \oplus a$ because inflow from new client trades is not modeled.

In an exemplary embodiment, risk-adjusted returns may be understood in accordance with the following. The discounted **gain** for trading in $\pi$ starting in $St = (Mt, Zt)$ is given as

$$G_t^\pi(S_t) := \sum_{\ell=t}^{\infty} \gamma(S_\ell) R(S_\ell, A_\ell) = \sum_{\ell=t}^{\infty} \gamma_\ell R_\ell \qquad (1)$$

where the dependency of the discount factor is primarily related to the state, not on time.

Contrary to classic reinforcement learning, the methodology does not use expected returns, but a risk-adjusted return measure to assess the value of future cashflows. In particular, the case of the entropy performance measure may be expressed for any future discounted cashflows $X$ as

$$U(X) := u^{-1}\mathsf{E}[u(X)] \qquad (2)$$

for $u(x) := - \exp(-Ax)$ and $u^{-1}(x) := - \log(-x)/\lambda$, where $\lambda \geq 0$ represents risk aversion.

This representation has the natural limits $U_P(X) = E_P[X]$ for $\lambda \downarrow 0$ and $U_P(X) := \inf X$ for $P \uparrow \infty$. The entropy is normalized, concave, monotone increasing and cash-invariant in the sense that for a fixed discounted cash amount $c$, $U(X + c) = U(X) + c$. In particular, this implies $U(X - U(X)) = 0$, which means that $U(X)$ may be interpreted as the monetary utility equivalent of $X$. In this aspect, the market may be understood as being free of statistical arbitrage if there is no trading policy for an empty portfolio which allows making money out of an empty portfolio, e.g.,

$$U\left( G_t^\pi(F_t, 0) \right) \leq 0$$

for all policies $\pi$.

In an exemplary embodiment, a case of an initial portfolio with maximum maturity among all its instruments may be assumed, while recognizing that perpetual securities such as shares do not have such a maximum maturity, so those would be unwound at market prices. It may further be assumed that the only allowed inflows in an exemplary portfolio arise from a hedging strategy according to an exemplary embodiment of the present disclosure, e.g. $p(m^l, z^l|s, a) = 0$ for any $z^l/=z \oplus a$.

Under an additional assumption of absence of statistical arbitrage, it is then clear that for any optimal trading policy there is a finite $T^*$ such that $Z_{T^*} = 0$. Gains are then given by the episodic representation

$$G_t^\pi(S_t) := \sum_{\ell=t}^{T^*} \gamma_\ell\, R_\ell \;\Big|\; Z_{T^*} = 0\,. \tag{3}$$

In an exemplary embodiment, the episodic problem

$$\sup_\pi :\; v_\pi(s_t) := U\big(G_t^\pi(s_t)\big)$$

was therefore solved for fixed initial inventory and market data, using direct deterministic policy search. It is worth nothing that this framework allows for the introduction of market impact, i.e. for underlying dynamics where the market evolution is affected by these trading actions.

The first drawback of this approach is that the model has to be re-learned as soon as the portfolio changes, for example from new client activity. Moreover, $T^*$ is still usually years in the future, and therefore, computing the gains over a sufficient number of sample paths requires simulation.

In an exemplary embodiment, in addition to being viewed as an episodic problem, deep hedging may be viewed as a continuous problem. To a degree this is a modelling choice to address the two concerns mentioned above: learning the model independently of the current state, without relying on explicitly modelling the market dynamics.

In an exemplary embodiment, the following expressions may be defined as above:

$$v_\pi(s) := U\big(G_t^\pi(s)\big)\,. \tag{4}$$

Therefore

$$\begin{aligned}
v_\pi(s) &= u^{-1}\mathbb{E}_{\pi,s',a}\big[u(\gamma(s)\,R(s,a))\,u(G_{t+1}^\pi(s'))\big]\\
&= u^{-1}\mathbb{E}_{s',a}\big[u(\gamma(s)\,R(s,a))\,\mathbb{E}_{\pi|s'}\big[u(G_{t+1}^\pi(s'))\big]\big]\\
&= u^{-1}\mathbb{E}_{s',a}\big[u\big(\gamma(s)\,R(s,a) + v_\pi(s')\big)\big]
\end{aligned}$$

which implies

$$v_\pi(s) = U_{s',a}\big(\gamma(s)\,R(s,a) + v_\pi(s')\big)\,. \tag{5}$$

Let

$$v^*(s) := \sup_\pi :\; v_\pi(s)\,. \tag{6}$$

The optimal value function then satisfies the Ballman dynamic programming representation

$$v^*(s) = \sup_a :\; U_{s'|s,a}\big(\gamma(s)\,R(s,a) + v^*(s')\big)\,. \tag{7}$$

In an exemplary embodiment, it is desired to solve finding an optimal $\pi$ for Equation (6) above by a variant of the actor-critic algorithm with a Monte Carlo forward run. An observed state is a pair $s = (m, z)$ where $z$ is the current position encoded in the LMR, and where $m$ represents all required market data for the problem below. Similarly as above, only a subset $f$ of $m$ will be used as features. The pair $(f, z)$ may be referred to as the explanatory state.

In an exemplary embodiment, it is assumed that there are given $M$ sample periods with initial states $s_{t1}^{(1)}$, ..., $s_{tM}^{(M)}$ with $s_{tk}^{(k)} = (m_{tk}^{(k)}, z_{tk}^{(k)})$. The $t_m$ here indicates the starting point of a period $[t_m, T_m]$ with $T_m := t_m + \tau$ where $\tau$ is a fixed number of business days. Different sample periods may share the same historical period, but then with a different initial inventory (e.g. if $t_k = t_k t$ then $z^{(k)} \neq z^{(k)}$).

In an exemplary embodiment, it is assumed that there is no dependency on the period $k$ and all variables are considered as drawn from a uniform distribution over a generic $s_t \equiv s^{(k)}$.

- Historic samples of our explanatory features $f_t, ..., f_T$;
- A range of $n$ hedging instruments with daily LMR $\mathbf{h}_t ..., \mathbf{h}_T$, discounted rewards $r^h$, and discounted terminal mid-market prices $h_T$.
- Data required to compute any trading cost $c£(a) := C(s£, a)$.
- An initial inventory of instruments $z_t$ represented by their daily LMR $e_t..., e_T$, discounted rewards $r^e$, and discounted mark-to-model values $p_t$ and $p_T$, computed using classic derivative models. A tilde $\sim$ is used to refer to any measure calculation referencing the statistical sample distribution.

In an exemplary embodiment, $\pi$ is parameterized by $\pi(f, z; \theta)$ with numerical parameters $\theta$, initialized with $\theta_0$ such that $\pi$ becomes a classic greek-based trading policy, or simply zero. Note that this parameterization does not depend on $m$ but f, as the latter is the explanatory features set. Then, for each period, the initial LMR may be defined as $z_t := e_t$ and an initial position in hedges may be defined as $\delta_t := 0$. Iteratively, samples $a_£ \sim \pi(f_£, z_£; \theta)$ may be drawn with an assumption that the samples are confined to the set $A_£$ of admissible actions. Set then $\delta_£ := \delta_{£-1} + a_£$ and then define a new LMR as $z_£ := e_£ + \delta_£ \cdot \mathbf{h}_£$. This makes use of the fact that the distribution of market data is independent of the other actions.

The period version of Equation (5) for our sample distribution for a given policy $\pi$ is given as

$$\tilde{v}_\pi(s_t) = \tilde{U}_{\pi|s_t}\left( \tilde{v}_\pi(s_T) + \sum_{r=t}^{T-1} r_r^e + \delta_\ell \cdot r_\ell^h - c_\ell(a_\ell) \right),$$

where the risk-adjusted operator $\tilde{U}$ is taken with respect to the sample distribution of $(a_t, s_t+1;... ;a_{T-1}, s_T)$. The variable $\tilde{v}_\pi(s)$ is parameterized by $v(f, z; \xi)$ with numerical parameters $\xi$ and then initialized with $\xi0$ such that $v(f_T, e_T + \delta_T h_T; \xi0) = p_T + \delta_T \cdot h_T$ for all $\delta_T$ and $v(ft, et; \xi0) = p_t$.

This approach is now used to iteratively improve the strategy and a value estimation function. Assume $\theta_n$ and $\xi_n$ are given. Define

$$g(\xi, \theta) := v(f_T, z_T; \xi) + \sum_{r=t}^{T-1} r_r^e + \delta_\ell \cdot r_\ell^h - c_\ell(a_\ell) \qquad (8)$$

$$a_\ell \leftarrow \pi(f_\ell, z_\ell; \theta).$$

This is a period gains process with a $\tau$-step Monte-Carlo look ahead. The actor minimizes $\tilde{U}_{s,\pi|s}(g(\xi_n; \theta_{n+1}))$, which is equivalent to minimizing

$$\theta_{n+1} \mapsto -\tilde{\mathbb{E}}_{s_t, \pi}\left[ u\, g(\xi_n; \theta_{n+1}) \right] \qquad (9)$$,

thereby starting the search for $\theta_{n+1}$ in $\theta_n$. The sample expectation is taken with respect to all $M$ samples $s_t$, and then for each sample under $(\pi|s_t)$. The corresponding "baseline" objective is given as

$$\theta_{n+1} \mapsto J(\theta_{n+1}) := -\tilde{\mathbb{E}}_{s_t, \pi}\left[ u\, g(\xi_n; \theta_{n+1}) - u\, v(f_t, z_t; \xi_n) \right]. \qquad (10)$$

The critic improves an estimate of the value function in parallel by minimizing

$$\xi_{n+1} \mapsto \frac{1}{2}\tilde{\mathbb{E}}_{s_t}\left[ \left( \tilde{U}_{\pi|s_t}[g(\xi_n, \theta_{n+1})] - v(f_t, z_t; \xi_{n+1}) \right)^2 \right].$$

which is equivalent to minimizing

$$\xi_{n+1} \mapsto \frac{1}{2}\bar{\mathbb{E}}_{s_t}\left[\left(u\,\bar{\mathbb{E}}_{\pi|s_t}[g(\xi_n,\theta_{n+1})] - u\,v(f_t, z_t; \xi_{n+1})\right)^2\right].$$

This expression contains nested expectations which cannot be resolved directly without bias with the fixed sample set. To alleviate this, it is noted that the following expression has the same gradient:

$$L(\xi_{n+1}) := \frac{1}{2}\bar{\mathbb{E}}_{s_t,\pi}\left[\left(u\,g(\xi_n,\theta_{n+1}) - u\,v(f_t, z_t; \xi_{n+1})\right)^2\right]. \tag{11}$$

Joining the two results in a cooperative actor-critic objective

$$\xi_{n+1}, \theta_{n+1} \mapsto \omega L(\xi_{n+1}) + (1-\omega)J(\theta_{n+1}) \tag{12}$$

where $\omega \in [0, 1]$ is a Langrange multiplier. For $\omega = 0$, a simplified version of the original periodic Deep Hedging problem over $T$ time steps is obtained, which finds a best hedge on an assumption that in $T$ the classic-model prices are valid mark-to-market prices. The standard actor-critic is obtained by performing one update with iterating $\omega \in \{0, 1\}$.

Accordingly, with this technology, an optimized process for implementing methods and systems for using a data-driven approach to optimize a hedging strategy in connection with managing a portfolio of securities and derivatives is provided.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the present disclosure in its aspects. Although the invention has been described with reference to particular means, materials and embodiments, the invention is not intended to be limited to the particulars disclosed; rather the invention extends to all functionally equivalent structures, methods, and uses such as are within the scope of the appended claims.

For example, while the computer-readable medium may be described as a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the embodiments disclosed herein.

The computer-readable medium may comprise a non-transitory computer-readable medium or media and/or comprise a transitory computer-readable medium or media. In a particular non-limiting, exemplary embodiment, the computer-readable medium can include a solid-state memory such as a memory card or other package that houses one or more non-volatile read-only memories. Further, the computer-readable medium can be a random access memory or other volatile rewritable memory. Additionally, the computer-readable medium can include a magneto-optical or optical medium, such as a disk or tapes or other storage device to capture carrier wave signals such as a signal communicated over a transmission medium. Accordingly, the disclosure is considered to include any computer-readable medium or other equivalents and successor media, in which data or instructions may be stored.

Although the present application describes specific embodiments which may be implemented as computer programs or code segments in computer-readable media, it is to be understood that dedicated hardware implementations, such as application specific integrated circuits, programmable logic arrays and other hardware devices, can be constructed to implement one or more of the embodiments described herein. Applications that may include the various embodiments set forth herein may broadly include a variety of electronic and computer systems. Accordingly, the present application may encompass software, firmware, and hardware implementations, or combinations thereof. Nothing in the present application should be interpreted as being implemented or implementable solely with software and not hardware.

Although the present specification describes components and functions that may be implemented in particular embodiments with reference to particular standards and protocols, the disclosure is not limited to such standards and protocols. Such standards are periodically superseded by faster or more efficient equivalents having essentially the same functions. Accordingly, replacement standards and protocols having the same or similar functions are considered equivalents thereof.

The illustrations of the embodiments described herein are intended to provide a general understanding of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. A method carried out by a computer for managing a portfolio of securities and derivatives, the method being implemented by at least one processor, the method comprising:

    identifying, by the at least one processor, a plurality of available hedging instruments based on the portfolio of securities and derivatives;
    obtaining, by the at least one processor, historical market data that relates to the identified plurality of hedging instruments;
    assessing, by the at least one processor, an optimized value of the portfolio of securities and derivatives based on the obtained historical market data; and
    determining, by the at least one processor, at least one potential action to be executed with respect to the plurality of available hedging instruments based on the assessed optimized value.

2. The method of claim 1, **characterized in that** the assessing the optimized value of the portfolio of securities and derivatives comprises generating a market model simulation function based on the securities portfolio and maximizing a value of the generated market model simulation function.

3. The method of claim 2, **characterized in that** the market model simulation function is based on a finite dimensional Linear Markov Representation (LMR) of the portfolio of securities and derivatives,
    wherein preferably the generating the market model simulation function comprises training the market model simulation function based on the obtained historical market data.

4. The method of claim 3, wherein the assessing the optimized value of the portfolio of securities and derivatives comprises evaluating a performance measure of a future cash flow as a function of a risk aversion parameter and maximizing the value of the generated market model simulation function based at least in part on the evaluated performance measure.

5. The method of claim 1, further comprising obtaining, by the at least one processor, additional information that relates to a first security included in the portfolio of securities and derivatives, wherein the assessing the optimized risk-adjusted value of the portfolio of securities and derivatives is based on the obtained historical market data and the obtained additional information.

**6.** The method of claim 1, **characterized in that** the determining the at least one potential action to be executed is based at least in part on at least one trading restriction, wherein preferably the at least one trading restriction includes at least one of a risk limit based on a current portfolio exposure, a liquidity restriction, and a regulatory constraint.

**7.** The method of claim 1, **characterized in that** the determining the at least one potential action to be executed is based at least in part on a transaction cost.

**8.** The method of claim 1, **characterized in that** the plurality of hedging instruments includes at least one hedging instrument that relates to a derivative for which no market price is publicly available.

**9.** A computing apparatus for managing a portfolio of securities and derivatives, the computing apparatus comprising:

> a processor;
> a memory; and
> a communication interface coupled to each of the processor and the memory,
> wherein the processor is configured to perform at least the following steps:

>> identify a plurality of available hedging instruments based on the portfolio of securities and derivatives;
>> obtain historical market data that relates to the identified plurality of hedging instruments;
>> assess an optimized value of the portfolio of securities and derivatives based on the obtained historical market data; and
>> determine at least one potential action to be executed with respect to the plurality of available hedging instruments based on the assessed optimized value.

**10.** The computing apparatus of claim 9, wherein the processor is further configured to perform the step of assessing the optimized value of the securities portfolio by generating a market model simulation function based on the portfolio of securities and derivatives and maximizing a value of the generated market model simulation function.

**11.** The computing apparatus of claim 10, **characterized in that** the market model simulation function is based on a finite dimensional Linear Markov Representation (LMR) of the portfolio of securities and derivatives, wherein preferably the processor is further configured to perform the steps of

> - training the market model simulation function based on the obtained historical market data and/or
> - assessing the optimized value of the portfolio of securities and derivatives by evaluating a performance measure of a future cash flow as a function of a risk aversion parameter and maximizing the value of the generated market model simulation function based at least in part on the evaluated performance measure.

**12.** The computing apparatus of claim 9, **characterized in that** the processor is further configured to obtain additional information that relates to a first security included in the portfolio of securities and derivatives, and to assess the optimized risk-adjusted value of the portfolio of securities and derivatives based on the obtained historical market data and the obtained additional information.

**13.** The computing apparatus of claim 9, **characterized in that** the processor is further configured to determine the at least one potential action to be executed based at least in part on at least one trading restriction, wherein preferably the at least one trading restriction includes at least one of a risk limit based on a current portfolio exposure, a liquidity restriction, and a regulatory constraint.

**14.** The computing apparatus of claim 9, **characterized in that** the processor is further configured to determine the at least one potential action to be executed based at least in part on a transaction cost.

**15.** The computing apparatus of claim 9, **characterized in that** the plurality of hedging instruments includes at least one hedging instrument that relates to a derivative for which no market price is publicly available.

100

102

| Processor 104 Instructions | Memory 106 Instructions | Display 108 | Input Device(s) 110 | Medium Reader 112 Instructions | Network Interface 114 | Output Device(s) 116 |
|---|---|---|---|---|---|---|

Bus 118

Network 122

120

## FIG. 1

EP 3 792 862 A1

Data-Driven
Portfolio
Management
Device 202

Client Device
208(1)

.
.
.

Client Device
208(n)

Communication Network(s) 210

200

Server
Device 204(1)

Database 206(1)

.
.
.

Server
Device 204(n)

Database 206(n)

**FIG. 2**

300

206(1)

204(1)

202

Hedging
Strategy
Optimization
Module
302

Historical Market
Data Repository

210

Portfolio
Management
Database

206(2)

210

208(2)

208(1)

# FIG. 3

400

FIG. 4

Europäisches
Patentamt

European
Patent Office

Office européen
des brevets

# EUROPEAN SEARCH REPORT

**Application Number**

EP 20 19 6345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/134501 A1 (CHEN WEI [US] ET AL) 14 May 2015 (2015-05-14) * abstract * * paragraph [0003] - paragraph [0008] * * paragraph [0025] - paragraph [0157] * * figures 1-8,10-11 * ----- | 1-15 | INV. G06Q40/06 |
| X | US 2008/313100 A1 (WEBER CLIFFORD J [US] ET AL) 18 December 2008 (2008-12-18) * abstract * * paragraph [0002] - paragraph [0019] * * paragraph [0031] - paragraph [0105] * * figures 1-6 * ----- | 1-15 | |

|  | TECHNICAL FIELDS SEARCHED (IPC) |
|---|---|
|  | G06Q |

The present search report has been drawn up for all claims

| Place of search | Date of completion of the search | Examiner |
|---|---|---|
| The Hague | 16 November 2020 | Bassanini, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..............................................................................................
& : member of the same patent family, corresponding
document

EPO FORM 1503 03.82 (P04C01)

## EP 3 792 862 A1

### ANNEX TO THE EUROPEAN SEARCH REPORT
### ON EUROPEAN PATENT APPLICATION NO.

EP 20 19 6345

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2020

| Patent document cited in search report | | Publication date | Patent family member(s) | | Publication date |
|---|---|---|---|---|---|
| US 2015134501 | A1 | 14-05-2015 | US 2015134501 A1<br>US 2015134566 A1 | | 14-05-2015<br>14-05-2015 |
| US 2008313100 | A1 | 18-12-2008 | US 2004186803 A1<br>US 2008313100 A1<br>US 2012254010 A1<br>US 2015310555 A1 | | 23-09-2004<br>18-12-2008<br>04-10-2012<br>29-10-2015 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62900961